(19) Europäisches Patentamt
European Patent Office
Office européen des brevets

(11) Publication number: **0 451 207 B1**

# (12) EUROPEAN PATENT SPECIFICATION

(45) Date of publication of patent specification: **26.04.95**

(51) Int. Cl.[6]: **C10L 1/18**, C10L 1/22, C07F 15/00

(21) Application number: **90901945.7**

(22) Date of filing: **20.12.89**

(86) International application number: **PCT/US89/05834**

(87) International publication number: **WO 90/07561 (12.07.90 90/16)**

## (54) USE OF A PLATINUM GROUP METAL COMPOSITION AS A FUEL ADDITIVE.

(30) Priority: **28.12.88 US 291245**

(43) Date of publication of application: **16.10.91 Bulletin 91/42**

(45) Publication of the grant of the patent: **26.04.95 Bulletin 95/17**

(84) Designated Contracting States: **AT BE CH DE ES FR GB IT LI LU NL SE**

(56) References cited:
**DE-A- 1 948 837**
**DE-A- 2 500 683**
**GB-A- 2 184 727**
**US-A- 2 086 775**
**US-A- 2 151 432**
**US-A- 2 875 233**
**US-A- 3 159 659**
**US-A- 3 328 440**
**US-A- 3 369 035**
**US-A- 3 397 214**
**US-A- 4 207 078**
**US-A- 4 225 529**
**US-A- 4 242 099**
**US-A- 4 295 816**
**US-A- 4 469 638**
**US-A- 4 533 502**
**US-A- 4 603 215**
**US-A- 4 741 820**
**US-A- 4 787 969**
**US-A- 4 795 549**

(73) Proprietor: **Fuel Tech N.V.**
**Daphneweg 29A**
**Curacao, Netherlands Antilles (AN)**

(72) Inventor: **EPPERLY, William, Robert**
**32 Canaan Close,**
**289 New Norwalk Road**
**New Canaan, CT 06840 (US)**
Inventor: **SPRAGUE, Barry, Normand**
**82 Long Meadow Road**
**Bethlehem, CT 06751 (US)**
Inventor: **KELSO, Danny, T.**
**11310 Maplesprings**
**Houston, TX 77043 (US)**
Inventor: **BOWERS, Wayne, E.**
**RFD 1, Box 750**
**Priest Hill Road**
**North Vassalboro, ME 04962 (US)**

(74) Representative: **VOSSIUS & PARTNER**
**Postfach 86 07 67**
**D-81634 München (DE)**

**EP 0 451 207 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

U.Belluco, "Organometallic and Coordin. Chemistry of Platinum", Publ. 1974, Academic Press (N.Y.)

G.Deganello, Publ. 1979, Academic Press (N.Y.)

R.Dickson, Publ. 1983, Adademic Press (N.Y.) "Organometallic Chemistry of Rhodium and Iridium"

P.Maitlis, "The Organic Chemistry of Palladium" publ. 1971, Academic Press (N.Y).

Chem.Abstracts, vol. 76, issued 1972, the abstract no. 112565P, Johnson, B.F.G. et al, 1972

Chem.Abstracts, vol. 82, issued 1975, see page 384, coumn 1, the abstract no. 4403z, Zakharkin, L.I. et al (1974)

Chem.Abstracts, vol. 97, issued 1982, see page 629, coumn 2, the abstract no. 110175w, Lutsenko, Z.L. et al (1982)

## Description

This application is a continuation-in-part of prior application serial no. 796,428, filed November 8, 1985, which in turn is a continuation-in-part of prior applications serial no. 677,954, filed December 4, 1984, and serial no. 790,738, filed October 24, 1985, which correspond to WO-A-8 603 492, that describes a gasoline and diesel fuel additive to improve the operating effeciency of internal combustion engines and to reduce the emission of particulates

The present invention relates to the use of certain platinum group metal compositions to improve the performance of internal combustion engines utilizing hydrocarbon fuels including gasoline, gasohol and diesel fuel, and, more particularly, to the use of additives and fuels which burn more efficiently and which help reduce noxious emissions.

Prior investigations involving the use of platinum group metals in internal combustion engines have led to the development of the catalytic converter for emissions reduction. Mechanical equipment has become one acceptable alternative to accomplish desired combustion improvements. Efforts are under way to also achieve such results through better combustion conditions through engine design and fuel additives. The efforts in engine design have provided significant improvements, but the objectives of improved operating efficiency and reduced noxious emissions are difficult to achieve simultaneously.

Experiences to date with fuel additives have been less successful. For example, Lyons and McKone disclose in US-A-2,086,775 and US-A-2,151,432 adding from 0.001-0.085% (i.e. from 10 to 850 parts per million or "ppm") of an organometallic compound or mixture to a base fuel such as gasoline, benzene, fuel oil, kerosene or blends to improve various aspects of engine performance. Included among the metals disclosed in these patents are the platinum group metals platinum and palladium. In both patents the preferred organometallic compounds are the beta diketone derivatives and their homologues such as the metal acetylacetonates, propionylacetonates, formylacetonates, and the like. The two Lyons and McKone patents state that concentrations of from 0.001-0.04%, (i.e. from 10 to 400 ppm) are not effective to improve combustion efficiency as introduced, but may become so under prolonged use as catalytically active deposits are built up in the combustion chamber. The disclosures further state that about 0.01% (i.e. 100 ppm) of the organometallic compound is usually sufficient, once the requisite amount of catalytically active deposits has been built up, to perpetuate that amount of deposits by replacement of losses therefrom. The compounds disclosed were therefore not capable of generating any instantaneous catalytic effect at low concentrations, and in higher concentrations would provide no economic benefit. This fact is confirmed in US-A-2,460,780 to Lyons and Dempsey at col. 1, lines 11-36.

The Lyons and Dempsey patent relates principally to employing catalysts which are soluble in water or other "internal liquid coolants" such as alcohol or soluble glycols or aqueous solutions of these. While catalyst levels based on the weight of metal compounds as low as 0.001% are disclosed, it is stated that for immediate catalytic effect, the catalyst compounds for useful effect may be present at a level of at least 1% of the weight of the operating fuel charge. No disclosure is given of fuel soluble catalysts at levels below 0.01% or without oxygenated solvents. Moreover, where alcohol and glycols are employed with water soluble catalysts, they are disclosed principally as solublizing carriers for catalysts and for their known internal cooling function at high load.

Robinson, in US-A-4,295,816, discloses an elaborate delivery system for introducing water soluble platinum group metal salts through the air intake of internal combustion engines to deliver platinum group metal catalysts to the combustion chamber at a level no greater than 9 milligram catalyst per kilogram of fuel. The equipment disclosed by Robinson, unfortunately, is far more complicated than would be desired for automotive operators and the water soluble salts employed e.g. halides, have disadvantages alone or when dissolved.

In DE-A-2,500,683, Brantl discloses a wide variety of catalytic metals which may be added to hydrocarbon fuels to reduce nitrogen monoxide and oxidize carbon monoxide at the moment of combustion in internal combustion engines. Among the metals disclosed are metal complexes of the metals ruthenium, rhodium, palladium, osmium, iridium and platinum, with different ligands, which can be added to the fuel individually or as a mixture. For these platinum group metals, broad concentration ranges of from 0.347 to 3.123 g/l of fuel are suggested for the various compositions listed in the disclosure, with the range for particularly favorable results being from 0.868 to 1.735 g/l of fuel. Considering the cost of these metals and the compositions containing them, there is a negative incentive for employing them at the high levels stated by the disclosure as effective. Moreover, the disclosed tetramethyl platinum compound is not known to exist.

Although the prior art has identified the platinum group metal compounds as superior catalysts for improving fuel efficiency and reducing noxious emissions, an ongoing problem has been to produce a

platinum group metal compound which is sufficiently stable for packaging and delivery to the engine as well as having sufficient solubility in the fuel and insolubility in water which may be contained with the fuel. Unfortunately, nothing in the prior art has provided such compounds.

The present invention comprises the use of certain platinum group metal compositions, as outlined in the claims for reducing emissions from or increasing the utilizable energy of fuels for powering internal combustion engines, for improving the operation of a diesel engine particulate trap, and for improving the operation of a catalytic converter, which involves the application of certain platinum group metal compounds described in more detail below which are directly soluble in the fuels. The compounds, preferably in combination with a solvent for them which is also miscible in the fuel, are most advantageously employed at very small but catalytically effective levels to provide from 0.01 to 1.0 parts of platinum group metal per 1 million parts of fuel (ppm). For the purposes of this description, all parts per million figures are on a weight to volume basis, i.e., grams/million cubic centimeters (which can also be expressed as milligrams/liter), and percentages are given by weight, unless otherwise indicated.

The present invention will be better understood and its advantages more apparent in view of the following detailed description, especially when read with reference to the appended drawings, wherein:

FIGURE 1 graphically represents the results of Example IVb.

The fuels used in internal combustion engines for which the method of this invention is effective include hydrocarbon fuels such as gasoline, diesel fuel and gasohol. Other fuels such as methane, propane, butane, residual fuel, kerosene and jet fuel can also be included consistent with engine design, availability and economics. For the purposes of this description, the term "gasoline" can be defined as a mixture of volatile hydrocarbons, including paraffinic, naphthenic, aromatic and olefinic hydrocarbons having a boiling range from 24°C to 232°C (75°F to 450°F), for use in a spark-ignited internal combustion engine and having an octane rating [(research + motor)/2] of at least 80, typically 87 to 89 or above, and according to the most preferred aspects of the invention, having less than about 1.4 grams per gallon of lead. Most preferably, the gasoline will be "unleaded" and contain no more than about 0.2 g. lead/l (0.05 grams of lead per gallon) and no more than about 0.1% of sulfur. Gasoline typically has a British Thermal Unit (BTU) value of about 182 kJ/kg (19,700 calories per pound). Moreover, the term "diesel fuel" can be defined as fuel oil Nos. 2 or 4 petroleum distillates or No. 6 residual fuel of volatility and cetane number characteristics effective for the purpose of fueling a wide range of internal combustion diesel engines; and the term "gasohol" can be defined as a blended mixture of gasoline, as defined above, and an alcohol, such as methanol, ethanol, tertiary butyl alcohol, isopropanol and/or pentanol, optionally with water and/or surfactants, of volatility and octane number characteristics effective for the purpose of fueling internal combustion gasoline engines.

The use of the present invention involves admixing with the fuel an additive which comprises a fuel-soluble, nonionic, organometallic platinum group metal coordination composition as further defined below. The composition is temperature stable, does not contain a substantial amount of phosphorus, arsenic, antimony or halides and has a partition ratio sufficient to maintain significant preferential solubility in the fuel. The nonionic, organic nature of the composition provides solubility in the fuels discussed above, thereby facilitating the introduction of the additive into the combustion chamber. Without such solubility, much of the additive would precipitate in the fuel tank or fuel lines of the engine prior to introduction into the combustion chamber.

The invention identifies temperature stability of the additive as important in practical and operational terms. In a commercial setting, a fuel additive is packaged and then can often sit on a store shelf or in a delivery truck for extended periods of time during which the additive can be exposed to great variations in temperature. If the breakdown temperature of the additive is not sufficiently high (i.e. if the additive is not temperature stable at the temperatures to which it is expected to be exposed), then the packaged additive will quickly break down and become virtually useless. Moreover, breakdown of the additive after mixing with the fuel will render the additive insoluble in the fuel, since the solubility is provided by the organic functional groups. Such loss of solubility will cause the additive to precipitate and not reach the combustion chamber, as discussed above. The breakdown temperature of the additive is at least about 40°C, and is preferably at least about 50°C in order to protect against most temperatures to which it can be expected to be exposed. In some circumstances, it will be necessary that the breakdown temperature be no lower than about 75°C.

In general, the additive comprises the platinum metal group composition as well as an oxygenated solvent therefor, as will be discussed in more detail below. The nonionic, organic nature of the platinum group metal composition helps to maintain the composition in solution in the solvent, thereby preventing "plating out" of the platinum group metal composition in the packaging medium.

As noted, the additive of the present invention does not contain a substantial amount of objectionable functional groups such as phosphorus, arsenic, antimony and, especially, halides, which have significant disadvantages like "poisoning" or otherwise reducing the effectiveness of the platinum group metal

composition catalyst. Halides have the additional undesirable effect of rendering a platinum group metal more volatile, leading to reduction of the amount of platinum group metal in the combustion chamber and engine system. A substantial amount of such functional groups is considered an amount effective to significantly reduce the effectiveness of the catalyst. Preferably, the purified platinum group metal additive composition contains no more than about 500 ppm (on a weight per weight basis) of phosphorus, arsenic, antimony or halides, and more preferably no more than about 250 ppm. Most preferably, the additive contains no phosphorus, arsenic, antimony or halides. Such objectionable functional groups can be minimized in several ways. The platinum group metal composition can be prepared in a process which utilizes precursors or reactant compositions having a minimum of such functional groups; or the additive can be purified after preparation. Most such methods of purification are known to the skilled artisan.

One preferred method of purifying the platinum group metal additive to remove halides is a process utilizing silver salts having non-halide anions which are harmless as compared to the halides being replaced and involves reacting them with the platinum group metal compound, whereby the halides in the composition are replaced by the anion of the silver salt (which can be any silver salts of carboxylic acids, such as silver benzoate, or silver nitrate) and the resulting composition is free of halides, plus a silver halide is produced. For instance, a slurry or solution in a polar solvent such as acetone or an alcohol and water of silver nitrate or silver benzoate can be prepared and reacted with the platinum group metal composition. The resultant platinum group metal composition is a benzoate or nitrate salt with silver halide also being produced. This process can be expected to reduce the halide content of a sample by about 50%, and even up to about 90% and higher.

The relative solubility of the additive in the fuel and water is also important since there is often a substantial amount of water admixed in with fuel. This relative solubility can be referred to as the partition ratio and is expressed as the ratio of the amount in milligrams per liter of composition which is present in the fuel to the amount of which is present in the water in a 100 milliliter (ml) sample which is 90% fuel and 10% water. The preferential solubility of the additive in fuel as compared to water (expressed as the partition ratio) can be critical because if a substantial amount of the additive is dissolved in the water which may be present, the overall effectiveness of the additive is proportionally reduced.

When the fuel being utilized is gasoline or diesel fuel, this partition ratio should be at least about 25 and most preferably greater than about 50. Because of the increased solubility of an organic platinum group metal composition in water as compared to gasohol, the partition ratio in gasohol could often not be expected to be as high but, rather, it could be as low as 10, and even 2. Such a low partition ratio is not desired (although as low as 5 in gasohol could be considered marginally operable). Indeed, partition ratios of much higher, i.e., at levels of those for gasoline or diesel fuel, are sought. In order to reduce the water susceptibility of the platinum group metal composition, the composition has at least one platinum group metal-to-carbon covalent bond. A platinum group metal-to-oxygen or platinum group metal-to-nitrogen bond is acceptable when the ligand is neutral (as will be discussed in more detail below), but there must also be at least one metal to carbon bond.

Platinum group metals include platinum, palladium, rhodium, ruthenium, osmium and iridium. Compounds including platinum, palladium and rhodium, especially platinum alone or possibly in combination with rhodium are preferred in the practice of this invention since the vapor pressure of these metals is sufficiently high to form engine deposits which have the desired effect on combustion.

Specific compounds required according the present invention for use as a fuel additive for reducing emissions from or increasing the utilizable energy of fuel for powering internal combustion engines and preferred for use as a fuel additive for improving the operation of a diesel engine particulate trap or for improving the operation of a catalytic converter are those platinum metal group-containing compositions selected from:

a) a composition of the general formula

$L^1PtR^1R^2$

wherein $L^1$ is either a single cyclic polyolefin or nitrogenous bidentate ligand or a pair of nitrogenous or acetylenic monodentate ligands; and $R^1$ and $R^2$ are each, independently, substituted or unsubstituted methyl, benzyl, aryl, cyclopentadiene or pentamethyl cyclopentadiene, preferably benzyl, methyl and/or phenyl provided that when the composition is used as a fuel additive for improving the operation of a diesel engine particulate trap or for improving the operation of a catalytic converter and $L^1$ is a single cyclic polyolefin, $R^1$ and/or $R^2$ is/are methyl or substituted or unsubstituted cyclooctadiene or pentamethyl cyclopentadiene;

b) a composition of the general formula

$L^2M^1R^3$

wherein $L^2$ is either a single cyclic polyolefin or nitrogenous bidentate ligand or a pair of nitrogenous or acetylenic monodentate ligands; $M^1$ is rhodium or iridium; and $R^3$ is cyclopentadiene or pentamethyl cyclopentadiene;

c) a composition of the general formula

$L^3M^2(C_4R^4{}_4)$

wherein $L^3$ is either a single cyclic polyolefin or nitrogenous bidentate ligand or a pair of nitrogenous monodentate ligands; $M^2$ is platinum, palladium, rhodium or iridium; and $R^4$ is $COOR^5$, wherein $R^5$ is hydrogen or alkyl having from 1 to 10 carbons, preferably methyl;

d) a composition of the general formula

$L^4M^3(COOR^6)_2$

or a dimer thereof, wherein $L^4$ is a non-nitrogenous cyclic polyolefin ligand, preferably cyclooctadiene or pentamethyl cyclopentadiene; $M^3$ is platinum or iridium; and $R^6$ is benzyl, aryl or alkyl, preferably having 4 or more carbons, most preferably phenyl;

e) a composition comprising the reaction product of $[L^5RhX]_2$ and $R^7MgX$ wherein $L^5$ is a non-nitrogenous cyclic polyolefin ligand, preferably cyclooctadiene or pentamethyl cyclopentadiene; $R^7$ is methyl, benzyl, aryl, cyclopentadiene or pentamethyl cyclopentadiene, preferably benzyl or phenyl; and X is a halide. Although presently uncharacterized, it is believed that this reaction product assumes the formula $L^5RhR^7$.

Functional groups which are especially preferred for use as ligands $L^1$ through $L^3$ are neutral bidentate ligands such as cyclopentadiene, cyclooctadiene, pentamethyl cyclopentadiene, cyclooctatetrene, norbornadiene, o-toluidine, o-phenantholine and bipyridine. Most preferred among monodentate ligands is pyridine.

The synthesis of the preferred compounds is relatively straightforward, with the most care being taken to avoid "contamination" of the product by the objectionable functional groups discussed above. For instance, the most preferred synthetic route for production of the compounds of the formula $L^1PtR^1R^2$ is by reacting commercially available platinum halides with the desired neutral ligand (except the pyridine derivative which can be added by displacement after the fact) and then reacting with a Grignard reagent having the formula $R_2MgX$, where X is a halide (and where the desired $R^1$ and $R^2$ in the end product are the same functional group). Where the $R^1$ and $R^2$ functional groups are desired to be different, a straightforward substitution reaction can then be run. Exemplary of compounds suitable for use in the present invention and prepared in this manner are dipyridine platinum dibenzyl; bipyridine platinum dibenzyl; cyclooctadiene platinum dimethyl; cyclooctadiene platinum diphenyl; cyclooctadiene platinum dibenzyl; cyclooctadiene platinum methyl cyclopentadiene; norbornadiene platinum di-cyclopentadiene; and dimethyl platinum cyclooctatetrene (which often assumes the formula dimethyl platinum cyclooctatetrene platinum dimethyl).

The compounds of the formula $L^2M^1R^3$ are prepared along a similar pathway, as are the reaction products of $[L^5RhX]_2$ and $R^6MgX$, with the exception that the starting materials have only one R functional group and are, with respect to $L^2M^1R^3$, $L^2RhR^3$ or $L^2IrR^3$. Exemplary of suitable compounds of the formula $L^2M^1R^3$ are cyclooctadiene rhodium cyclopentadiene; cyclooctadiene rhodium pentamethyl cyclopentadiene; norbornadiene rhodium pentamethyl cyclopentadiene; cyclooctadiene iridium cyclopentadiene; cyclooctadiene iridium pentamethyl cyclopentadiene; norbornadiene iridium cyclopentadiene; and norbornadiene iridium pentamethyl cyclopentadiene. Exemplary of compounds which can function as the precursors for the reaction product can include cyclooctadiene rhodium chloride dimer and benzyl magnesium chloride.

Advantageously, in the Grignard-type syntheses, the Grignard reagent can be replaced by one having the formula $R_2Z$ where Z is commonly Na, Li, K or Tl. This is especially preferred since the halides which are present in a Grignard reagent are eliminated, providing less halides in the final product and also advantageously producing a higher yield of the desired product.

The preparation of compositions of the formula $L^3M^2(C_4R^4{}_4)$ is also straightforward and proceeds by reacting $M^2$(dibenyilidine acetone)$_2$ with dimethylacetylene dicarboxylate in acetone and then adding the $L^3$ ligand. Exemplary of suitable compounds according this formula, which has the structure

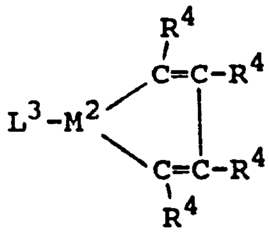

is tetrakis (methoxy carbonyl) palladia cyclopentadiene (wherein $L^3$ is cyclopentadiene, $M^2$ is palladium, and $R^4$ is $COOCH_3$).

The compositions of the formula $L^4M^3(COOR^5)_2$ can be prepared by reacting $L^4M^3X_2$, where X is a halide and a silver carboxylate such as silver benzoate. This composition can form a dimer, especially when $M^3$ is platinum. Exemplary of suitable compounds having the general formula $L^4M^3(COOR^5)_2$ arecyclooctadiene platinum dibenzoate dimer; and pentamethyl cyclopentadiene iridium dibenzoate.

The additive compositions according to the invention improve operating efficiency of internal combustion engines in terms of increased power output per unit of fuel burned which results in improved fuel economy and/or greater horsepower per revolutions per minute (RPM) and reduced emissions of particulates and noxious gases such as carbon monoxide, hydrocarbons and nitrogen monoxide. Additionally, the additive compositions of this invention can function to improve the performance of a diesel particulate trap by providing or replenishing catalyst metals on the trap, which function to facilitate the "burning off" of trapped particulates, thusly increasing the amount of time between regenerations, effectiveness and life of the trap, and decreasing the fuel penalty associated with use of a diesel trap. A portion of the catalyst metals are vaporized in the combustion chamber and travel in the exhaust gases to the trap where they perform this function.

The compositions can also be used benefically with a catalytic converter. Vaporized catalyst metal compositions can travel from the combustion chamber and replenish the converter, thus extending the effectiveness and life of the converter. In fact, a converter having no catalyst present can be installed and, over time, the practice of this invention will function to actually "load" the converter with catalyst.

The additives when added to diesel fuel and supplied to an engine are believed to reduce the so-called "delay period" which occurs immediately after injection of the fuel into the combustion chamber is initiated, due to improvement in the shape of the indicator diagram. This reduction of delay between vaporization and ignition can explain the improvements noted by the present invention but not suggested by the prior art; however, this theoretical explanation is presented only because it is the best available and there may well be others which even better explain the surprising results noted. The additives provide beneficial results over long periods of continuous use in internal combustion diesel engines.

Timing of fuel injection during the compression stroke is an important consideration in a diesel engine. Timing is optimized to maximize fuel economy while meeting important emissions standards. As already pointed out, the fuel additive reduces the delay time until fuel starts to burn and its effect is similar to advancing the time of fuel injection before top dead center. As a result, there is an opportunity to re-optimize fuel injection timing (i.e., delaying injection) when the additive is used in order to optimize the overall system (improve fuel economy while meeting emission standards).

The additives are believed to improve combustion efficiency in gasoline- or gasohol-powered internal combustion engines by speeding up flame initiation from the spark and increasing subsequent flame speed. It is well known that each cycle in the spark ignition engine varies around the mean optimum pressure pattern with maximum pressure shortly after top dead center. The method of this invention is believed to reduce the so called "cyclic variation" from this optimum and thus increases the power for the same amount of fuel, which improves fuel consumption. This theory is provided to help explain the unexpected results achieved in gasoline- or gasohol-powered internal combustion engines, but it is not meant to be limiting in any regard. The additives also provide beneficial results over long periods of continuous use in internal combustion gasoline or gasohol engines.

The additive will be added to the fuel in an amount effective to improve engine performance, in terms of operating efficiency or emissions reduction. Typically, the platinum group metal compound will supply an amount of the platinum group metal within a range of 0.01 to 1.0 parts of the platinum group metal per one million parts of fuel (ppm w/v). A more preferred range is from 0.05 to 0.5 ppm and, most preferably, the platinum group metal will be supplied at a level of from 0.10 to 0.30 ppm on the same basis.

The additive composition will preferably include a solvent which is soluble in the fuel, preferably made of a mixture of a carrier such as kerosene, xylene or other hydrocarbons plus certain solvents which provide

enhancements in the effectiveness of the platinum group metal compound. Among the preferred solvents are oxygenated hydrocarbons, such as alcohols, heterocyclic oxygen compounds and ethers. Particularly preferred compounds are: 1 to 4 carbon alcohols, especially ethanol; acetone; tetrahydrofuran; and methyl tertiary butyl ether. Octyl nitrate also functions well in diesel fuel additives.

The fuel additive compositions may also contain other additives, such as detergents, antioxidants and octane improvers which are known as beneficial to engine performance, but the use of such is not an essential feature of the invention.

The total amount of solvent and other additives used will depend on the dosage of platinum group metal composition required and on what is a convenient concentration to handle relative to the amount of fuel to be treated. Typically, solvent (plus other like additive) volumes of 0.1 to 40.0 liters/gram of platinum.

The following examples are presented for the purpose of further illustrating and explaining the present invention and the best mode for carrying it out, and are not to be taken as limiting.

Example I

a. Preparation of Cyclooctadiene Platinum Diphenyl ($CODPt(C_6H_5)_2$)

A Grignard reagent is prepared by combining 20 grams of magnesium, 135 milliliters (ml) of ethyl ether and 0.05 g iodine crystal as a catalyst. The reaction is started by the addition of 1 ml of bromobenzene with gentle heating. A mixture comprising 113 g of bromobenzene and 404 ml of ethyl ether is then slowly added. The reaction is allowed to go to completion by refluxing.

Thusly prepared Grignard reagent (469 ml) and 100 ml of benzene are then combined under a nitrogen blanket. Cyclooctadiene platinum dichloride (50 g) is then slowly added, with the temperature maintained below 32.2 °C (90 °F). Ethyl ether (100 ml) and benzene (100 ml) are then added. The resultant mixture is then diluted to 1600 ml with benzene, stirred to dissolve all solids and then cooled to -17.78 °C (0 °F). The cooled solution is hydrolyzed with 201 ml of distilled water and allowed to warm to room temperature (approx. 21.11 °C (70 °F)), then washed three times with 200 ml of distilled water and slurried with about 20 g of activated carbon. The resulting slurry is filtered and the solvents are partially evaporated under vacuum to provide a yield of $CODPt(C_6H_5)_2$ of 19.58 grams.

b. Preparation of Tetrakis (Methoxy Carbonyl) Palladia Cyclooctadiene ($CODPdC_4R_4$)

Acetone (14 g), dimethylacetylene dicarboxylate (3.1 g) and palladium (dibenzilidine acetone)$_2$ (1.0 gr) are mixed together for one hour. Tetrahydrofuran (14 g) is then added, along with 3 g of 1,5-cyclooctadiene. The solution is set aside until clear (overnight) to provide a yield of 35.0 grams of solution containing 0.5% palladium.

c. Preparation of Cyclootadiene Platinum Dibenzoate Dimer ($[CODPt(COOC_6H_5)_2]_2$)

Silver benzoate is prepared by combining 7.5 g of sodium hydroxide and 585 ml of water; and 22.9 grams of benzoic acid and 622.5 ml of water, individually. The two thusly prepared mixtures are then combined and stirred for 1 hour (until the benzoic acid is dissolved). The pH is measured and adjusted to pH 6-8, if necessary, by adding appropriate components and the solution filtered, if necessary, to yield 1248 ml of 0.15M sodium benzoate.

To 660 ml of the thusly-prepared $NaCOOC_6H_5$ solution is added 990 ml of 0.10N silver nitrate, with stirring. The mixture is stirred for 10 minutes, filtered by vacuum and the solid saved, to yield 22.6 g of $AgCOOC_6H_5$.

A solution of 625 ml of acetone and 625 ml of water is prepared. To this solution is added 22.5 g of silver benzoate to form a slurry. 25 g of cyclooctadiene platinum diiodide is then added, stirred for 1 hour and allowed to stand overnight. The solids are filtered out by vacuum and saved. 170 ml of 0.10N silver nitrate is added and the mixture stirred for 1 hour. The solids are again filtered out by vacuum and saved. The filtrate is washed twice with 1250 ml toluene, the toluene washes are combined and then treated with activated carbon, and filtered. The solvents are then partially evaporated under vacuum to provide a yield of $[CODPt(COOC_6H_5)_2]_2$ of 0.50 grams.

e. Preparation of the Reaction Product of Cyclooctadiene Rhodium Chloride Dimer and Grignard Reagent

A Grignard reagent is prepared by combining 20 g of magnesium, 135 ml of ethyl ether and 0.05 g of iodine crystal as a catalyst. The reaction is started by the addition of 1 ml of bromobenzene with gentle heating. A mixture comprising 113 g of bromobenzene and 404 ml of ethyl ether is then added.

The thusly prepared Grignard reagent (37 ml) and 10 ml of benzene are then combined. Cyclooctadiene rhodium chloride dimer (6.1 g) is then slowly added, with the temperature maintained below 32.2 °C (90 °F). Benzene (86 ml) is then added and the resultant mixture is cooled to -17.8 °C (0 °F). The cooled solution is hydrolized with 31 ml of distilled water and allowed to warm to room temperature (approx. 21.1 °C (70 °F)), then washed three times with 200 ml of distilled water and slurried with 3 g of activated carbon and filtered. The solvents are evaporated to provide a yield of 0.67 grams.

Example II

The partition ratio of cyclooctadiene platinum dimethyl ($CODPt(CH_3)_2$), platinum acetylacetonate ($Pt(AcAc)_2$) and dipyridine platinum acetylacetonate ($Py_2Pt(AcAc)_2$) are measured by adding 100-110 mg/l of each compound (by metal) into 90 ml of fuel (in the case of gasohol, only the hydrocarbon fraction is considered) and then 10 ml of water is added. The mixture is then shaken and set aside for 4 days. Final water and fuel layers are both analyzed for metal content. The results are calculated in terms of mg of metal/liter in both the fuel and water layers and then the ratio of mg/l in fuel:mg/l in water is calculated. These results are set out in Table 1.

Table 1

| Compound | Gasoline Fuel | $H_2O$ | Ratio | Diesel Fuel | $H_2O$ | Ratio | Gasohol Fuel | $H_2O$ | Ratio |
|---|---|---|---|---|---|---|---|---|---|
| $CODPt(CH_3)_2$ | 101 | 0 | -- | 104 | 0 | -- | 100 | 1 | 100 |
| $Pt(AcAc)_2$ | 98 | 5 | 20 | 106 | 5 | 21 | 98 | 72 | 1.3 |
| $Py_2Pt(AcAc)_2$ | 78 | 200 | 0.39 | 87 | 120 | 0.72 | 87 | 164 | 0.53 |

Example III

Silver washing of a platinum composition is accomplished by the following method:

3.02 g of cyclooctadiene platinum diphenyl having a chloride content of 140 ppm (wt/wt) and a bromide content of 2400 ppm is admixed into a solution of 50 ml of acetone and 50 ml of water. 25 ml of 0.10N silver nitrate is added and the mixture stirred for 1 hour. The solids are filtered out, the solvents partially evaporated under vacuum and the crystals collected. The collected crystals are found to have a chloride content of 170 ppm and a bromide content of 67 ppm.

Example IV

a. An additive for engine testing comprising cyclooctadiene platinum diphenyl ($CODPt(C_6H_5)_2$) is prepared according to the following procedure:

a1. A Grignard reagent is prepared by combining 16 gr of magnesium, 109 ml of ethyl ether and 0.05 g iodine crystal as a catalyst. The reaction is started by the addition of 0.5 ml of bromobenzene with gentle heating. A mixture comprising 91 grams of bromobenzene and 325 ml of ethyl ether is then slowly added. The reaction is allowed to go to completion by refluxing.

Thusly prepared Grignard reagent (350 ml) and 81 ml of benzene are then combined under a nitrogen blanket. Cyclooctadiene platinum dichloride (40.4 g) is then slowly added, with the temperature maintained below 32.1 °C (90 °F) for 1 hour. Ethyl ether (81 ml) and benzene (81 ml) are then added and stirring continued for 4 hours. The resultant mixture is then diluted to 1293 ml with benzene, stirred to dissolve all solids and then cooled to -17.8 °C (0 °F). The cooled solution is hydrolyzed with 162 ml of distilled water, then washed twice with 160 ml of distilled water. 685 ml of this solution is then slurried with about 10 g of activated carbon. The resulting slurry is filtered and the solvents are partially evaporated under vacuum to provide a yield of $CODPt(C_6H_5)_2$ of 13.85 grams.

a2. A Grignard reagent is prepared by combining 20 g of magnesium, 135 ml of ethyl ether and 0.05 g iodine crystal as a catalyst. The reaction is started by the addition of 1 ml of bromobenzene with

gentle heating. A mixture comprising 113 grams of bromobenzene and 404 ml of ethyl ether is then slowly added. The reaction is allowed to go to completion by refluxing.

The thusly prepared Grignard reagent (469 ml) and 100 ml of benzene are then combined under a nitrogen blanket. Cyclooctadiene platinum dichloride (50 g) is then slowly added, with the temperature maintained below 32.1 °C (90 °F) and the mixture allowed to stand overnight. 100 ml of ethyl ether and 100 ml of benzene are then added and stirring continued for 1 hour. The resultant mixture is then diluted to 1600 ml with benzene, stirred to dissolve all solids and then cooled to -17.8 °C (0 °F). The cooled solution is hydrolyzed with 201 ml of distilled water, then washed twice with 200 ml of distilled water. 1530 ml of this solution is then washed once with 180 ml of distilled water and slurried with about 10 g of activated carbon. The resulting slurry is filtered and the solvents are partially evaporated 700 ml under vacuum, and then again slurried with about 10 g of activated carbon. The solvents are again partially evaported under vacuum to provide a yield of $CODPt(C_6H_5)_2$ of 27.23 grams.

a3. The 41.08 g of $CODPt(C_6H_5)_2$ prepared as described above is combined and dissolved in a mixture comprising 396 ml of ethyl ether and 396 ml of benzene under nitrogen blanket. A Grignard reagent prepared as in a1. above (5 ml) is then added and the mixture is stirred for two hours and allowed to stand at room temperature overnight. The mixture is cooled to -17.8 °C (0 °F) and hydrolyzed with 201 ml of distilled water, then washed three times with 200 ml of distilled water. The solution is slurried with activated carbon and filtered, and the solvents partially evaporated under vacuum to provide a yield of $CODPt(C_6H_5)_2$ of 25.9 grams (analyzed to contain 388 ppm of bromine and 4.4 ppm of iodine).

a4. The thusly prepared $CODPt(C_6H_5)_2$ is then added to a solvent mixture comprising acetone, xylene, kerosene and a detergent to provide a fuel additive comprising 0.30% of $CODPt(C_6H_5)_2$.

The engine on which the following test is run is a Cummins 6CTA8.3 Diesel Engine rated 179 kJ/s (240 horsepower (HP)) at 2100 revolutions per minute (RPM), which is mounted on an engine dynamometer with motoring capabilities. The fuel is Phillips 2-D emissions grade test diesel fuel. The engine is lubricated with a low ash lubricating oil.

b. The decrease in pressure drop across a diesel trap through which the exhaust flows provided by the additive of this invention (which is indicative of lower trap loading and more effective and longer performance) is measured by measuring the pressure drop (in inches of water) across a diesel trap over time by conventional means in the Cummins diesel engine described above running without treatment as a baseline and with treatment as described. The results are set out in Table 2 and graphically illustrated in Figure 1.

**Table 2**

| Without Treatment | | With Treatment | |
|---|---|---|---|
| Hours | Pressure Drop | Hours | Pressure Drop |
| 0 | 3.8 | 0 | 2.8 |
| 4.7 | 5.2 | 1.4 | 4.0 |
| 5.8 | 5.6 | 2.2 | 4.2 |

| Without Treatment | | With Treatment | |
|---|---|---|---|
| Hours | Pressure Drop | Hours | Pressure Drop |
| 7.0 | 6.2 | 2.9 | 4.4 |
| 8.3 | 8.0 | 3.0 | 3.5 |
| 9.7 | 8.3 | 4.0 | 4.6 |
| 10.3 | 9.5 | 4.7 | 4.8 |
| 11.6 | 10.1 | 5.9 | 5.2 |
| 12.8 | 10.2 | 7.0 | 5.8 |
| 13.9 | 12.0 | 8.1 | 6.4 |
| 15.0 | 12.7 | 9.1 | 7.1 |
| 15.2 | 13.3 | 10.2 | 7.9 |
| 16.8 | 13.8 | 11.3 | 8.5 |
| 17.0 | 14.0 | 12.4 | 9.2 |
| 17.3 | 14.5 | 13.5 | 9.8 |
| | | 14.6 | 10.5 |
| | | 15.7 | 11.5 |
| | | 16.8 | 11.8 |
| | | 17.9 | 11.8 |
| | | 18.9 | 12.3 |
| | | 20.0 | 12.3 |
| | | 21.2 | 13.0 |
| | | 22.3 | 13.5 |
| | | 23.4 | 13.8 |
| | | 24.4 | 13.8 |
| | | 25.6 | 14.0 |
| | | 26.7 | 15.5 |

**With Treatment**

| Hours | Pressure Drop |
|---|---|
| 27.8 | 15.5 |
| 28.9 | 16.5 |
| 30.7 | 14.0 |
| 31.1 | 14.1 |
| 31.4 | 14.3 |
| 31.8 | 14.3 |

From the data of Table 2, as graphically illustrated in Figure 1, it is apparent that the method of the present invention is effective at increasing the effectiveness and life of a diesel particulate trap.

## Claims

1. Use of a platinum group metal composition as a fuel additive for reducing emissions from or increasing the utilizable energy of fuel for powering internal combustion engines, for improving the operation of a diesel engine particulate trap, or for improving the operation of a catalytic converter, wherein the platinum group metal coordination composition is a substantially phosphorous-, arsenic-, antimony, and halide-free, fuel soluble, nonionic, organometallic composition having at least one platinum group metal-to-carbon covalent bond, and having a breakdown temperature of at least 40 °C which, when used as a fuel additive for reducing emissions from or increasing the utilizable energy of fuel for powering internal combustion engines or preferably when used as a fuel additive for improving the operation of a diesel engine particulate trap or for improving the operation of a catalytic converter, comprises

   a) a composition of the general formula

   $L^1PtR^1R^2$

   wherein $L^1$ is either a single cyclic polyolefin or nitrogenous bidentate ligand or a pair of nitrogenous or acetylenic monodentate ligands; and $R^1$ and $R^2$ are each, independently, substituted or unsubstituted methyl, benzyl, aryl, cyclooctadiene or pentamethyl cyclopentadiene; provided that when the composition is used as a fuel additive for reducing emissions from or increasing the utilizable energy of fuel for powering internal combustion engines and $L^1$ is a single cyclic polyolefin and $R^1$ and/or $R^2$ is/are methyl or substituted or unsubstituted cyclooctadiene or pentamethyl cyclopentadiene;

   b) a composition of the general formula

   $L^2M^1R^3$

   wherein $L^2$ is either a single cyclic polyolefin or nitrogenous bidentate ligand or a pair of nitrogenous or acetylenic monodentate ligands; $M^1$ is rhodium or iridium; and $R^3$ is cyclooctadiene or pentamethyl cyclopentadiene;

   c) a composition of the general formula

   $L^3M^2(C_4R^4{}_4)$

   wherein $L^3$ is either a single cyclic polyolefin or nitrogenous bidentate ligand or a pair of nitrogenous monodentate ligands, $M^2$ is platinum, palladium, rhodium, or iridium; and $R^4$ is $COOR^5$, wherein $R^5$ is hydrogen or alkyl having from 1 to 10 carbons;

   d) a composition of the general formula

$L^4M^3(COOR^6)_2$

or a dimer thereof, wherein $L^4$ is a non-nitrogenous cyclic polyolefin ligand; $M^3$ is platinum or iridium; and $R^6$ is alkyl; or

e) a composition comprising the reaction product of $L^5RhX$ and $R^7MgX$ wherein $L^5$ is a non-nitrogenous cyclic polyolefin ligand; $R^7$ is methyl, benzyl, aryl, cyclooctadiene or pentamethyl cyclopentadiene; and X is a halide.

**2.** The use of claim 1, wherein said composition is selected so as to have a breakdown temperature of at least about 50 °C.

**3.** The use of claim 1 or 2, wherein the fuel is gasoline or diesel fuel and said composition is selected so as to have a partition ratio of at least about 25.

**4.** The use of claim 3, wherein the partition ratio of said composition is at least about 50.

**5.** The use of any one of claims 1 to 4, wherein $L^1$, $L^2$ and $L^3$ are selected from the group consisting of cyclopentadiene, cyclooctadiene, pentamethyl cyclopentadiene, cyclooctatetrane, o-phenanthroline, o-toluidine, norbornadiene, pyridine, and bipyridine.

**6.** The use of any one of claims 1 to 5, wherein $L^4$ and $L^5$ are selected from the group consisting of cyclooctadiene and pentamethyl cyclopentadiene.

**7.** The use of any one of claims 1-6, wherein the composition further comprises a fuel-soluble solvent for said composition.

**8.** The use of claim 7, wherein the fuel is diesel fuel and said solvent is octyl nitrate.

**9.** The use of claim 7, wherein the fuel is gasoline and said solvent is ethanol, acetone, tetrahydrofuran, methyl tertiary butyl ether or mixtures thereof.

**10.** The use of any one of claims 1-9, wherein the use is for improving the operation of a diesel engine particulate trap or for improving the operation of a catalytic converter and comprises cyclooctadiene platinum dibenzyl in the fuel in an amount which provides a concentration of platinum in the fuel within the range from 0.01 to 0.5 parts per million of the fuel.

**11.** The use of any one of claims 1-9, wherein the use is for improving the operation of a diesel engine particulate trap or for improving the operation of a catalytic converter and comprises cyclooctadiene platinum diphenyl in the fuel in an amount which provides a concentration of platinum in the fuel within the range from 0.01 to 0.5 parts per million of the fuel.

**12.** The use of any one of claims 1-9, wherein the use comprises cyclooctadiene platinum dimethyl in the fuel in an amount which provides a concentration of platinum in the fuel within the range from 0.01 to 0.5 parts per million of the fuel.

**Patentansprüche**

**1.** Verwendung einer Zusammensetzung mit Metallen der Platingruppe als Treibstoffzusatz zur Verminderung der Emissionen oder zur Erhöhung der nutzbaren Energie von Treibstoff zum Betreiben von Verbrennungsmotoren, zur Verbesserung des Betriebs eines Dieselmotorenteilchenfängers oder zur Verbesserung des Betriebs eines Katalysators, wobei die Koordinationszusammensetzung mit einem Metall der Platingruppe eine im wesentlichen phosphor-, arsen-, antimon- und halogenidfreie, im Treibstoff lösliche, nichtionische, organometallische Zusammensetzung mit mindestens einer kovalenten Bindung zwischen einem Metall der Platingruppe und Kohlenstoff und mit einer Zerfallstemperatur von mindestens 40 °C ist, die, wenn sie als Treibstoffzusatz zur Verminderung der Emissionen oder zur Erhöhung der nutzbaren Energie von Treibstoff zum Betreiben von Verbrennungsmotoren verwendet wird, oder vorzugsweise, wenn sie als Treibstoffzusatz zur Verbesserung des Betriebs eines Dieselmotorenteilchenfängers oder zur Verbesserung des Betriebs eines Katalysators verwendet wird, umfaßt

a) eine Zusammensetzung der allgemeinen Formel

$L^1PtR^1R^2$

wobei $L^1$ entweder ein einzelnes cyclisches Polyolefin oder einen stickstoffhaltigen zweizähnigen Liganden oder ein Paar aus einzähnigen stickstoffhaltigen oder Acetylenliganden bedeutet und $R^1$ und $R^2$ jeweils unabhängig voneinander einen substituierten oder unsubstituierten Methyl-, Benzyl-, Aryl-, Cyclooctadien- oder Pentamethylcyclopentadienrest darstellen; mit der Maßgabe, daß $L^1$ ein einzelnes cyclisches Polyolefin bedeutet und $R^1$ und/oder $R^2$ eine Methylgruppe oder einen substituierten oder unsubstituierten Cyclooctadien- oder Pentamethylcyclopentadienrest darstellt/darstellen, wenn die Zusammensetzung als Treibstoffzusatz zur Verminderung der Emissionen oder zur Erhöhung der nutzbaren Energie von Treibstoff zum Betreiben von Verbrennungsmotoren verwendet wird;

b) eine Zusammensetzung der allgemeinen Formel

$L^2M^1R^3$

wobei $L^2$ entweder ein einzelnes cyclisches Polyolefin oder einen stickstoffhaltigen zweizähnigen Liganden oder ein Paar aus einzähnigen stickstoffhaltigen oder Acetylenliganden bedeutet, $M^1$ ein Rhodium- oder Iridiumatom darstellt und $R^3$ einen Cyclooctadien- oder Pentamethylcyclopentadienrest bedeutet;

c) eine Zusammensetzung der allgemeinen Formel

$L^3M^2(C_4R^4{}_4)$

wobei $L^3$ entweder ein einzelnes cyclisches Polyolefin oder einen stickstoffhaltigen zweizähnigen Liganden oder ein Paar aus stickstoffhaltigen einzähnigen Liganden darstellt, $M^2$ ein Platin-, Palladium-, Rhodium- oder Iridiumatom bedeutet und $R^4$ einen Rest $COOR^5$ darstellt, wobei $R^5$ ein Wasserstoffatom oder einen Alkylrest mit 1 bis 10 Kohlenstoffatomen bedeutet;

d) eine Zusammensetzung der allgemeinen Formel

$L^4M^3(COOR^6)_2$

oder ein Dimer davon, wobei $L^4$ einen nicht stickstoffhaltigen cyclischen Polyolefinliganden darstellt, $M^3$ ein Platin- oder Iridiumatom bedeutet und $R^6$ einen Alkylrest darstellt, oder

e) eine Zusammensetzung, die das Umsetzungsprodukt von $L^5RhX$ und $R^7MgX$ umfaßt, wobei $L^5$ einen nicht stickstoffhaltigen cyclischen Polyolefinliganden bedeutet, $R^7$ einen Methyl-, Benzyl-, Aryl-, Cyclooctadien- oder Pentamethylcyclopentadienrest darstellt und X ein Halogenid bedeutet.

**2.** Verwendung nach Anspruch 1, wobei die Zusammensetzung so ausgewählt wird, daß sie eine Zerfallstemperatur von mindestens etwa 50 °C aufweist.

**3.** Verwendung nach Anspruch 1 oder 2, wobei der Treibstoff Benzin oder Dieseltreibstoff ist und die Zusammensetzung so ausgewählt wird, daß sie ein Verteilungsverhältnis von mindestens etwa 25 aufweist.

**4.** Verwendung nach Anspruch 3, wobei das Verteilungsverhältnis der Zusammensetzung mindestens etwa 50 ist.

**5.** Verwendung nach einem der Ansprüche 1 bis 4, wobei $L^1$, $L^2$ und $L^3$ aus Cyclopentadien, Cyclooctadien, Pentamethylcyclopentadien, Cyclooctatetraen, o-Phenanthrolin, o-Toluidin, Norbornadien, Pyridin und Bipyridin ausgewählt sind.

**6.** Verwendung nach einem der Ansprüche 1 bis 5, wobei $L^4$ und $L^5$ aus Cyclooctadien und Pentamethylcyclopentadien ausgewählt sind.

**7.** Verwendung nach einem der Ansprüche 1 bis 6, wobei die Zusammensetzung ferner ein treibstofflösliches Lösungsmittel für die Zusammensetzung umfaßt.

**8.** Verwendung nach Anspruch 7, wobei der Treibstoff Dieseltreibstoff ist und das Lösungsmittel Octylnitrat ist.

**9.** Verwendung nach Anspruch 7, wobei der Treibstoff Benzin ist und das Lösungsmittel Ethanol, Aceton, Tetrahydrofuran, Methyl-tertiär-butylether oder Gemische daraus ist.

**10.** Verwendung nach einem der Ansprüche 1 bis 9, wobei die Verwendung zur Verbesserung des Betriebs eines Dieselmotorenteilchenfängers oder zur Verbesserung des Betriebs eines Katalysators dient und Cyclooctadienplatindibenzyl im Treibstoff in einer Menge umfaßt, die eine Platinkonzentration im Treibstoff im Bereich von 0,01 bis 0,5 ppm bezogen auf den Treibstoff bereitstellt.

**11.** Verwendung nach einem der Ansprüche 1 bis 9, wobei die Verwendung zur Verbesserung des Betriebs eines Dieselmotorenteilchenfängers oder zur Verbesserung des Betriebs eines Katalysators dient und Cyclooctadienplatindiphenyl im Treibstoff in einer Menge umfaßt, die eine Platinkonzentration im Treibstoff im Bereich von 0,01 bis 0,5 ppm bezogen auf den Treibstoff bereitstellt.

**12.** Verwendung nach einem der Ansprüche 1 bis 9, wobei die Verwendung Cyclooctadienplatindimethyl im Treibstoff in einer Menge umfaßt, die eine Platinkonzentration im Treibstoff im Bereich von 0,01 bis 0,5 ppm bezogen auf den Treibstoff bereitstellt.

**Revendications**

**1.** Utilisation d'une composition de métal du groupe du platine comme additif pour carburant pour réduire les émissions provenant de moteurs à combustion interne ou augmenter l'énergie utilisable du carburant alimentant les moteurs à combustion interne, pour améliorer le fonctionnement d'un collecteur particulaire d'un moteur diesel ou pour améliorer le fonctionnement d'un convertisseur catalytique, dans laquelle la composition de coordination de métal du groupe du platine est une composition organométallique, non ionique, soluble dans le carburant, essentiellement exempte de phosphore, d'arsenic, d'antimoine et d'halogénure comportant au moins une liaison covalente métal du groupe du platine-carbone et ayant une température de dissociation d'au moins 40 °C qui, lorsqu'elle est utilisée comme additif pour carburant pour réduire les émissions des moteurs à combustion interne ou augmenter l'énergie utilisable du carburant alimentant les moteurs à combustion interne ou, avantageusement, lorsqu'elle est utilisée comme additif pour combustible pour améliorer le fonctionnement d'un collecteur particulaire d'un moteur diesel ou pour améliorer le fonctionnement d'un convertisseur catalytique, comprend :

a) une composition de la formule générale :

$L^1PtR^1R^2$

dans laquelle $L^1$ représente un simple polyoléfine cyclique ou un ligand bidenté azoté ou une paire de ligands monodentés azotés ou acétyléniques et $R^1$ et $R^2$ représentent chacun, indépendamment, un groupe méthyle, benzyle, aryle, cyclooctadiène ou pentaméthyl cyclopentadiène substitué ou non substitué, pour autant que, lorsque la composition est utilisée comme additif pour carburant pour réduire les émissions des moteurs à combustion interne ou augmenter l'énergie utilisable du carburant alimentant les moteurs à combustion interne et $L^1$ représente une simple polyoléfine cyclique, $R^1$ et/ou $R^2$ est/sont du méthyle ou un groupe cyclooctadiène ou pentaméthyl cyclopentadiène substitué ou non substitué;

b) une composition de la formule générale :

$L^2M^1R^3$

dans laquelle $L^2$ représente un simple polyoléfine cyclique ou un ligand bidenté azoté ou une paire de ligands monodentés azotés ou acétyléniques, $M^1$ est du rhodium ou de l'iridium et $R^3$ représente un groupe cyclooctadiène ou pentaméthyl cyclopentadiène;

c) une composition de la formule générale :

$L^3M^2(C_4R^4{}_4)$

dans laquelle $L^3$ représente un simple polyoléfine cyclique ou un ligand bidenté azoté ou une paire de ligands monodentés azotés, $M^2$ est du platine, du palladium, du rhodium ou de l'iridium et $R^4$ représente un groupe $COOR^5$, dans lequel $R^5$ est de l'hydrogène ou un groupe alkyle de 1 à 10 atomes de carbone;

d) une composition de la formule générale :

$L^4M^3(COOR^6)_2$

ou un dimère de celle-ci, dans laquelle $L^4$ représente un ligand polyoléfinique cyclique non azoté, $M^3$ est du platine ou de l'iridium et $R^6$ représente un groupe alkyle; ou

e) une composition comprenant le produit de réaction de $L^5RhX$ et $R^7MgX$ où $L^5$ représente un ligand polyoléfinique cyclique non azoté, $R^7$ représente un groupe méthyle, benzyle, aryle, cyclooctadiène ou pentaméthyl cyclopentadiène et X est un halogénure.

**2.** Utilisation suivant la revendication 1, dans laquelle la composition susdite est choisie de manière à avoir une température de dissociation d'au moins environ 50 °C.

**3.** Utilisation suivant l'une ou l'autre des revendications 1 et 2, dans laquelle le carburant est de l'essence ou un combustible diesel et la composition est choisie de manière à avoir un rapport de partage d'au moins environ 25.

**4.** Utilisation suivant la revendication 3, dans laquelle le rapport de partage de la composition est d'au moins environ 50.

**5.** Utilisation suivant l'une quelconque des revendications 1 à 4, dans laquelle $L^1$, $L^2$ et $L^3$ sont choisis dans le groupe comprenant le cyclopentadiène, le cyclooctadiène, le pentaméthyl cyclopentadiène, le cyclooctatétrène, la o-phénanthroline, la o-toluidine, le norbornadiène, la pyridine et la bipyridine.

**6.** Utilisation suivant l'une quelconque des revendications 1 à 5, dans laquelle $L^4$ et $L^5$ sont choisis dans le groupe comprenant le cyclooctadiène et le pentaméthyl cyclopentadiène.

**7.** Utilisation suivant l'une quelconque des revendications 1 à 6, dans laquelle la composition comprend de plus un solvant soluble dans le carburant pour ladite composition.

**8.** Utilisation suivant la revendication 7, dans laquelle le carburant est un combustible diesel et le solvant est le nitrate d'octyle.

**9.** Utilisation suivant la revendication 7, dans laquelle le carburant est de l'essence et le solvant est de l'éthanol, de l'acétone, du tétrahydrofuranne, de l'éther méthyl tertiobutylique ou un mélange de ceux-ci.

**10.** Utilisation suivant l'une quelconque des revendications 1 à 9, dans laquelle l'utilisation est réalisée pour améliorer le fonctionnement d'un collecteur particulaire d'un moteur diesel ou pour améliorer le fonctionnement d'un convertisseur catalytique et comprend du cyclooctadiène platine dibenzyle dans le combustible en une quantité qui confère une concentration de platine dans le combustible dans la gamme de 0,01 à 0,5 partie par million du combustible.

**11.** Utilisation suivant l'une quelconque des revendications 1 à 9, dans laquelle l'utilisation est réalisée pour améliorer le fonctionnement d'un collecteur particulaire d'un moteur diesel ou pour améliorer le fonctionnement d'un convertisseur catalytique et comprend du cyclooctadiène platine diphényle dans le combustible en une quantité qui confère une concentration de platine dans le combustible dans la gamme de 0,01 à 0,5 partie par million du combustible.

**12.** Utilisation suivant l'une quelconque des revendications 1 à 9, dans laquelle l'utilisation comprend du cyclooctadiène platine diméthyle dans le carburant en une quantité qui confère une concentration de platine dans le carburant dans la gamme de 0,01 à 0,5 partie par million du carburant.

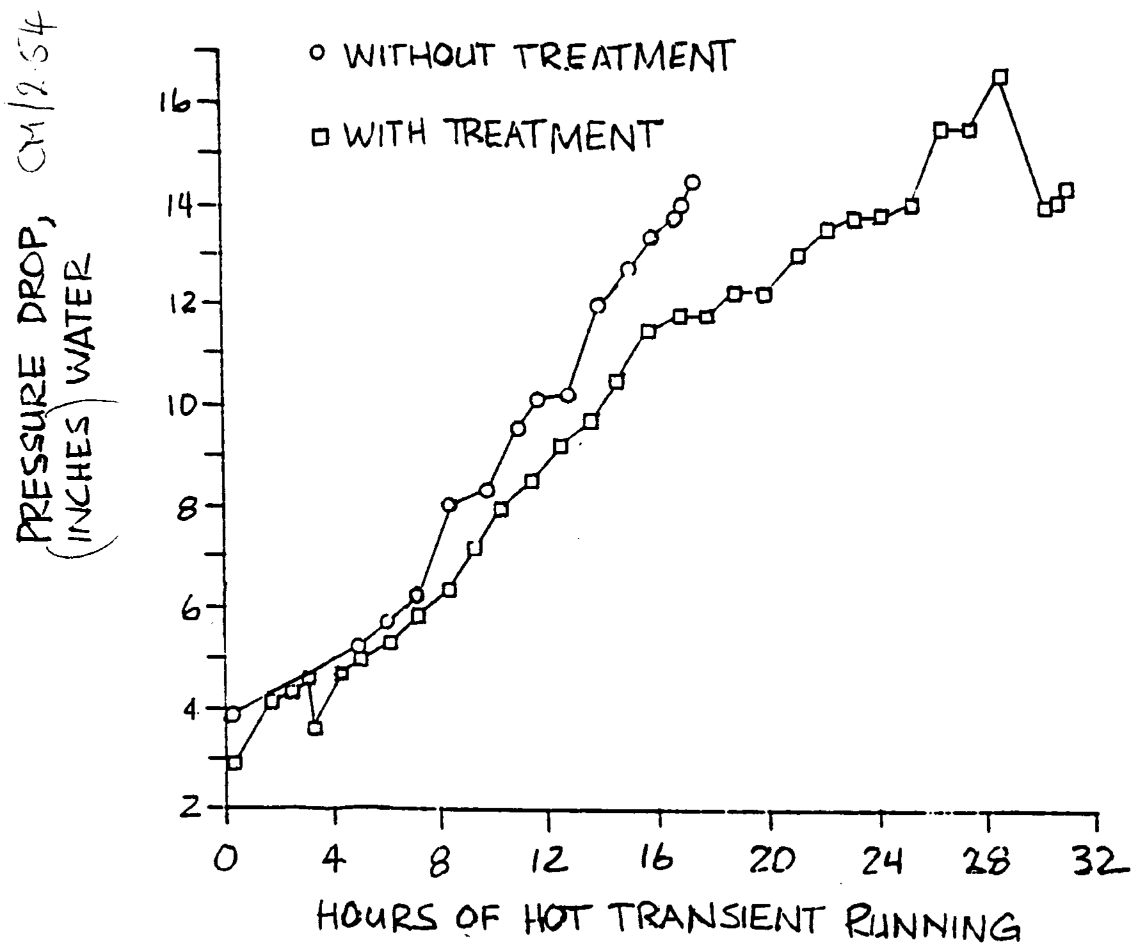

o WITHOUT TREATMENT
□ WITH TREATMENT
PRESSURE DROP, CM/2.54 (INCHES) WATER
16
14
12
10
8
6
4
2
0
4
8
12
16
20
24
28
32
HOURS OF HOT TRANSIENT RUNNING


FIG. 1